# EUROPÄISCHE PATENTANMELDUNG

(11) **EP 4 508 971 A1**
(43) Veröffentlichungstag der Anmeldung: **19.02.2025**
(21) Anmeldenummer: 24182848.2
(22) Anmeldetag: 18.06.2024
(51) Int. Cl.: A01F 12/18

(54) **MÄHDRESCHER UND DRESCHWERK DAFÜR**

(30) Priorität: 17.08.2023 DE 102023122117
(71) Anmelder: CLAAS Selbstfahrende Erntemaschinen GmbH, 33428 Harsewinkel (DE)
(72) Erfinder: Esken, Dirk, 59494 Soest-Meckingsen (DE); Theuer, Jan, 33330 Gütersloh (DE); Waten, Björn, 59320 Westkirchen (DE); Specht, Norbert, 33428 Harsewinkel (DE); Franke, Timo, 48361 Beelen (DE); Dewitt, Klaus, 33758 Schloß Holte (DE); Bürger, Alexander, 33442 Herzebrock-Clarholz (DE)
(74) Vertreter: CLAAS 365FarmNet GmbH

(57) **Zusammenfassung**

Ein Dreschwerk (1) für einen Mähdrescher umfasst eine Dreschstufe (4) und eine Abscheidestufe (10), die angeordnet ist, um von der Dreschstufe (4) einen Strom von wenigstens partiell von seinem Kornanteil befreitem Erntegut zu empfangen. Die Abscheidestufe (10) umfasst eine um eine Achse (34) drehbare Abscheidetrommel (13) und einen die Abscheidetrommel (13) umgebenden Abscheidekorb (17). Die Abscheidetrommel (13) weist eine Mehrzahl von Werkzeugen (22) mit jeweils wenigstens einer den Strom des Ernteguts kontaktierenden Wirkoberfläche (28, 29) auf. Eine erste (29) der Wirkoberflächen schneidet eine von ihrem achsfernsten Punkt (32) und der Achse (34) aufgespannte Radialebene (r₂) unter einem ersten Anstellwinkel (α), und eine zweite (28) der Wirkoberflächen schneidet eine von ihrem achsfernsten Punkt (31) und der Achse (34) aufgespannte Radialebene (r₁) unter einem zweiten Anstellwinkel (β), der von dem ersten Anstellwinkel (α) verschieden ist.

## Beschreibung

Die vorliegende Erfindung betrifft ein Dreschwerk und einen damit ausgestatteten Mähdrescher, wie z.B. aus DE 10 2016 118 333 A1 bekannt.

Das in dieser Druckschrift beschriebene Dreschwerk umfasst eine Dreschstufe mit einer drehangetriebenen Dreschtrommel und einem unbewegten Dreschkorb, der die Dreschtrommel auf einem Teil ihres Umfangs umgibt und dadurch einen Dreschspalt bildet, in welchem geerntetes Getreide gedroschen, ein Teil des ausgedroschenen Korns über Löcher des Dreschkorbs abgeführt und der verbleibende Erntegutstrom einer Abscheidestufe zugeführt wird. Um wenigstens einen Teil des in dem verbleibenden Erntegutstrom noch enthaltenen Korns zu bergen, ist eine Abscheidetrommel der Abscheidestufe relativ zu einem sie umgebenden Abscheidekorb drehbar und fördert durch ihre Drehung einerseits, dass der Erntegutstrom stromabwärts weitergefördert wird, und andererseits, dass im Erntegutstrom enthaltene Körner an den Abscheidekorb angedrückt werden und durch Löcher des Abscheidekorbs hindurchtreten und abgeschieden werden.

Es ist bekannt, an der Abscheidetrommel paddelartig abstehende Werkzeuge vorzusehen, die zum Andrücken des Ernteguts an den Abscheidekorb als auch zu dessen Förderung beitragen. Ein Dilemma dabei ist, dass zum Erzielen einer optimalen Förderwirkung das Werkzeug idealerweise in radialer Richtung orientiert sein sollte, so dass es das Erntegut vor sich her schieben kann, ohne es stark zu verdichten, während zum Andrücken des Ernteguts an den Abscheidekorb das Werkzeug so aus der Radialrichtung heraus gekippt sein sollte, dass eine dem Erntegut zugewandte Wirkoberfläche des Werkzeugs mit dem Abscheidekorb einen keilförmigen, sich entgegen der Bewegungsrichtung des Werkzeugs verengenden Zwischenraum bildet. Eine hohe Abscheideleistung ist daher nur auf Kosten der Förderleistung erreichbar und birgt das Risiko, dass das Dreschwerk bei hohem Gutaufkommen verstopft; wenn man hingegen die Orientierung des Werkzeugs näher an der Radialrichtung wählt, um die Verstopfungsgefahr zu vermindern, so beeinträchtigt dies die Abscheideleistung und damit den wirtschaftlichen Nutzen, der der Grund für die Existenz der Abscheidetrommel ist.

Eine Aufgabe der Erfindung ist, ein Dreschwerk bzw. einen Mähdrescher mit einem Dreschwerk anzugeben, bei denen trotz hoher Abscheideleistung eine verbesserte Toleranz gegen Verstopfung erreicht wird.

Die Aufgabe wird einem Aspekt der Erfindung zufolge gelöst, indem bei einem Dreschwerk für einen Mähdrescher mit einer Dreschstufe und einer Abscheidestufe, die angeordnet ist, um von der Dreschstufe einen Strom von wenigstens partiell von seinem Kornanteil befreitem Erntegut zu empfangen, wobei die Abscheidestufe eine um eine Achse drehbare Abscheidetrommel und einen die Abscheidetrommel umgebenden Abscheidekorb umfasst, die Abscheidetrommel eine Mehrzahl von Werkzeugen mit jeweils wenigstens einer den Strom des Ernteguts kontaktierenden Wirkoberfläche aufweist, eine erste der Wirkoberflächen eine von ihrem achsfernsten Punkt und der Achse aufgespannte Radialebene unter einem ersten Anstellwinkel schneidet, und eine zweite der Wirkoberflächen eine von ihrem achsfernsten Punkt und der Achse aufgespannte Radialebene unter einem zweiten Anstellwinkel schneidet, der von dem ersten Anstellwinkel verschieden ist. So kann die Orientierung einer der Wirkoberflächen eher auf effiziente Gutförderung, die der anderen auf wirksames Andrücken des Ernteguts an den Abscheidekorb ausgelegt sein; infolge ihrer örtlichen Nähe trägt die Förderwirkung der einen Wirkoberfläche auch dazu bei, eine übermäßige, zur Blockade führende Verdichtung von Erntegut an der anderen zu verhindern.

Dabei können die erste und die zweite Wirkoberfläche sowohl in Richtung der Achse aufeinander folgen, z.B. indem sie an einem gleichen in Richtung der Achse langgestreckten Werkzeug gebildet sind, als auch in Richtung der Achse überlappen, z.B. indem sie an verschiedenen, in Umfangsrichtung aufeinander folgend angeordneten Werkzeugen gebildet sind.

Experimente haben gezeigt, dass der erste Anstellwinkel in einem Intervall [30°-Δα, 30°+Δα] liegen sollte, wobei Δα kleiner als 10°, vorzugsweise kleiner als 5° oder kleiner als 2° ist.

Der zweite Anstellwinkel hingegen liegt vorzugsweise in einem Intervall [40°-Δβ, 40°+Δβ], wobei Δβ kleiner als 10°, vorzugsweise kleiner als 5° oder kleiner als 2° ist.

Der Unterschied (oder Betrag der Differenz) zwischen erstem und zweitem Anstellwinkel sollte hingegen mindestens 2°, vorzugsweise mindestens 5° oder 10° betragen.

Die Gefahr, dass übermäßig verdichtetes Erntegut zu einem Steckenbleiben der Abscheidetrommel führt, ist umso größer, je weiter die Orientierung der Wirkoberfläche von der Radialrichtung abweicht. Um der Gefahr des Steckenbleibens entgegenzuwirken, ist ein Gutaustrittsende am hinteren Ende des Zwischenraums zwischen Wirkoberfläche und Abscheidekorb, d.h. ein Abstand zwischen dem achsfernsten Punkt der Wirkoberfläche und dem Abscheidekorb vorzugsweise bei jeder der ersten Wirkoberflächen mindestens so groß wie bei einer der zweiten Wirkoberflächen.

Mehrere der Wirkoberflächen können an einem gleichen plattenartigen Werkzeug vorgesehen sein. Insbesondere kann das wenigstens eine Werkzeug plattenartig mit einem parallel zur Achse langgestreckten Rückgrat und von dem Rückgrat radial nach außen abstehenden Fingern sein, wobei jeder Finger eine der Wirkoberflächen aufweist und die Orientierungen der Wirkflächen von zueinander benachbarten Fingern unterschiedlich sind. Insbesondere können die Finger jeweils abwechselnd eine der ersten und eine der zweiten Wirkoberflächen aufweisen.

Um die Zahl der Fertigungsschritte bei der Fertigung der Werkzeuge zu minimieren, ist das das Rückgrat eines Werkzeugs koplanar zu einem Teil seiner Finger, vorzugsweise zu denjenigen Fingern, die jeweils eine der zweiten Wirkoberflächen aufweisen.

Wenn das das Werkzeug aus einem Stück Flachmaterial durch Ausbilden eines randseitig offenen Einschnitts zwischen je zwei Fingern und Auslenken jedes zweiten Fingers aus einer Ebene des Rückgrats gebildet wird, kann das Auslenken bei denjenigen Fingern unterbleiben, deren Wirkoberflächen dieselbe Orientierung wie das Rückgrat haben.

Wenn mehrere Werkzeuge (22) über den Umfang der Abscheidetrommel verteilt sind, sind ihre Wirkoberflächen vorzusgweise so gegeneinander versetzt, dass eine erste Wirkoberfläche eines der Werkzeuge im radialen Schnitt mit einer zweiten Wirkoberfläche eines anderen der Werkzeuge überlappt. So kann vermieden werden, dass Teile des Abscheidekorbs nur mit ersten oder nur mit zweiten Wirkoberflächen zusammenwirken, was zu einer sicheren und gleichmäßigen Förderung des Ernteguts beiträgt.

Um den Zusammenbau des Dreschwerks zu erleichtern, kann ein Rotor der Abscheidetrommel einen Querschnitt in Form eines Sterns mit mehreren Zacken aufweisen, wobei eine in Drehrichtung der Abscheidetrommel vordere Flanke jedes Zackens als Träger für eines der Werkzeuge ausgebildet ist, insbesondere als Träger, an dem das Rückgrat des Werkzeugs anliegend montierbar ist. Insbesondere kann der Zacken als ein an einer Außenfläche des im Wesentlichen zylindrischen Rotorkerns montiertes Winkelprofil ausgebildet sein, an dessen in Umdrehungsrichtung vorderen Schenkel das Werkzeug befestigt, im Interesse seiner Auswechselbarkeit vorzugsweise verschraubt ist.

Die Erfindung ist sowohl anwendbar auf ein Dreschwerk, bei dem die Achse der Abscheidetrommel parallel ist zu einer Achse der Dreschtrommel, und das Gut im Spalt zwischen dem der Abscheidetrommel und dem Abscheidekorb in Umfangsrichtung gefördert werden muss, um einen Gutauslass zu erreichen, als auch auf ein Dreschwerk bei dem die Achse der Abscheidetrommel quer zu einer Achse einer Dreschtrommel der Dreschstufe orientiert ist. Um bei letzterem einen Guttransport durch die Abscheidestufe zu gewährleisten, kann das langgestreckte Werkzeug oder eine mit dem Werkzeug zusammenwirkende Rippe des Abscheidekorbs sich wendelförmig entlang der Achse der Abscheidetrommel erstrecken.

Gegenstand der Erfindung ist ferner ein Mähdrescher mit einem Dreschwerk wie oben beschrieben. Der Mähdrescher kann eine Nachbearbeitungseinrichtung, insbesondere einen Hordenschüttler, die angeordnet ist, um den Strom von wenigstens partiell ausgedroschenem Erntegut von der Abscheidetrommel zu empfangen, und/oder eine Wendetrommel zum Überleiten des Stroms von Erntegut von der Abscheidetrommel zur Nachbearbeitungseinrichtung umfassen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen Mähdrescher in einer Seitenansicht;
- Fig. 2: eine Abscheidetrommel des Mähdreschers in perspektivischer Ansicht;
- Fig. 3: ein von der Abscheidetrommel getrenntes Werkzeug in perspektivischer Ansicht;
- Fig. 4: das Werkzeug in einer Seitenansicht; und
- Fig. 5: ein vollständiges Dreschwerk in einer Seitenansicht.

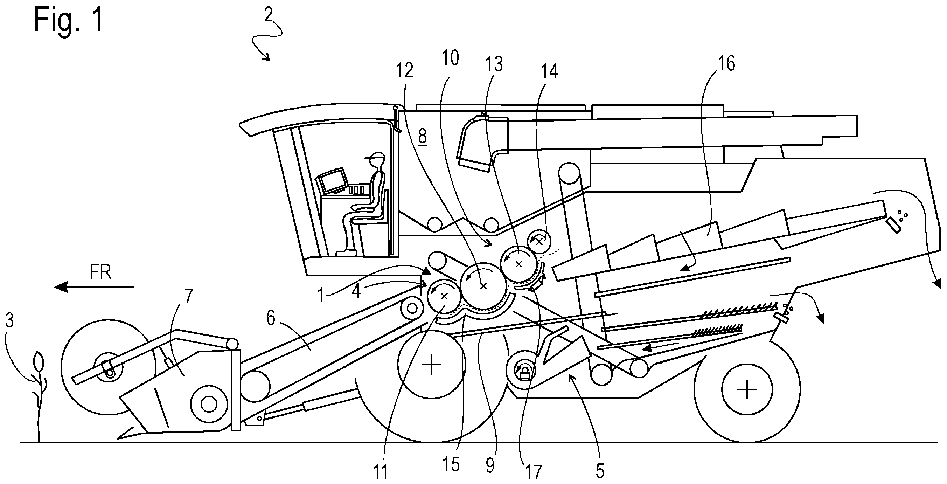

Fig. 1 zeigt in einer teilweise transparenten Seitenansicht einen Mähdrescher. Der Mähdrescher hat eine starre Karosserie 2, an der ein Vorsatzgerät 7 zum Ernten von Pflanzen 3 höhenverstellbar angebracht ist. Von dem Vorsatzgerät 7 gekapptes und aufgefangenes Erntegut wird über einen Schrägförderer 6 einem Dreschwerk 1 im Innern der Karosserie 2 zugeführt.

Das Dreschwerk 1 umfasst eine Dreschstufe 4 im engeren Sinn, in der wenigstens ein Teil der im Erntegut enthaltenen Körner durch eine Drehung einer Dreschtrommel 12 relativ zu einem sie auf wenigstens einem Teil ihres Umfangs umgebenden Dreschkorb 15 vom restlichen Erntegut gelöst wird. Der Dreschtrommel 12 ist hier eine Zuführtrommel 11 vorgelagert, die das Erntegut zu einer Matte formt, der kontinuierlich durch den Spalt zwischen Dreschtrommel 12 und Dreschkorb 15 geführt werden kann. Da bereits die Zuführtrommel 11 Dreschwirkung aufweisen kann, ist auch sie auf einem Teil ihres Umfangs vom Dreschkorb 15 umgeben. Wenn durch das Dreschen von anhaftenden Pflanzenbestandteilen gelöste Körner auf dem Weg durch den Spalt an die Oberfläche des Dreschkorbs 15 gelangen, fallen sie durch Löcher des Dreschkorbs 15 auf einen Zuführboden 9 einer Reinigungsstufe 5 und werden, nachdem sie in dieser von Spelzen und anderen kleinteiligen Verunreinigungen befreit worden sind, in einen Korntank 8 befördert. Die Reinigungsstufe 5 mit einem Gebläse und dem Luftstrom des Gebläses ausgesetzten Sieben und Böden sowie der Korntank 8 sind dem Fachmann vertraut und werden hier nicht im Detail beschrieben.

Körner, die in der Dreschstufe 4 von umgebenden Pflanzenbestandteilen daran gehindert worden sind, den Dreschkorb 15 zu erreichen, werden zusammen mit diesen Pflanzenbestandteilen durch die Drehung der Dreschtrommel 12 weiterbefördert zu einer Abscheidestufe 10. In dieser erstreckt sich unterhalb einer Abscheidetrommel 13 ein Abscheidekorb 17, durch dessen Öffnungen weiterhin Körner abgeschieden werden, um zur Reinigungsstufe 5 zu gelangen. Der nun von den ursprünglich enthaltenen Körnern weitgehend befreite Erntegutstrom wird durch die Bewegung einer der Abscheidetrommel 13 nachgelagerten Wendetrommel 14 ausgeschoben auf einen Hordenschüttler 16.

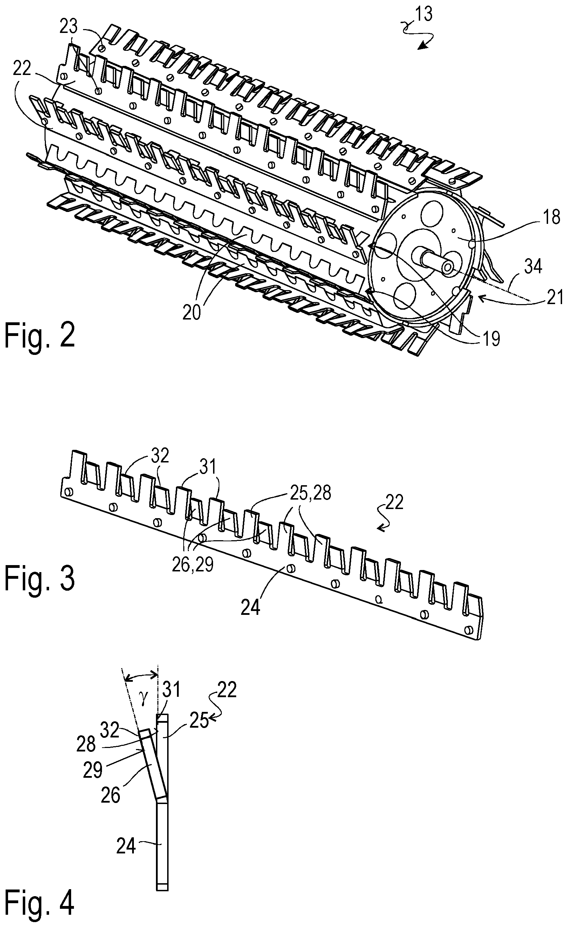

In der in Fig. 1 gezeigten Ausgestaltung umfasst die Abscheidestufe 10 eine Abscheidetrommel 13, deren Achse 34 (s. Fig. 2) wie die der Dreschtrommel 12 horizontal und senkrecht zur Fahrtrichtung FR des Mähdreschers ausgerichtet ist. Die Abscheidetrommel 13 ist an ihrer Unterseite von einem Abscheidekorb 17 umgeben, der sich in Verlängerung des Dreschkorbs 15 erstreckt und wie dieser Öffnungen aufweist, durch die Körner aus dem Erntegutstrom austreten und die Reinigungsstufe 5 erreichen können.

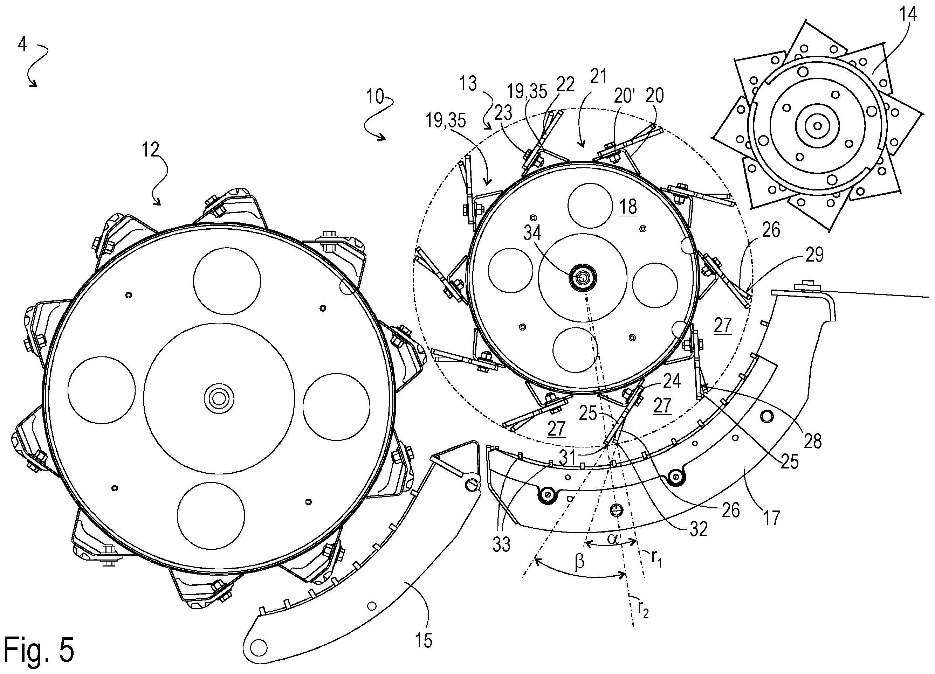

Fig. 2 zeigt die Abscheidetrommel 13 in einer perspektivischen Ansicht. Die Abscheidetrommel 13 umfasst einen zylindrischen Rotorkern 18, an dessen Umfangsfläche Winkelprofile 19 in regelmäßigen Winkelabständen befestigt sind. Die Winkelprofile 19 haben jeweils zwei langgestreckte ebene Schenkel 20 und sind an dem Rotorkern 18 so angeordnet, dass jeweils eine Ecke, an der die beiden Schenkel 20 aufeinandertreffen, vom Rotorkern 18 abgewandt ist, während die von der Ecke abgewandten Kanten der Schenkel am Rotorkern 18 anliegen. Die Winkelprofile 19 bilden so zusammen mit dem Rotorkern 18 einen Rotor 21 von - wie am besten in der Seitenansicht der Fig. 5 erkennbar - sternförmigem Querschnitt, wobei jeweils ein Winkelprofil 19 einem Zacken 35 (s. Fig. 5) des Sterns entspricht.

Von den zwei Schenkeln 20 jedes Winkelprofils 19 ist in Fig. 2 allenfalls der in Drehrichtung der Abscheidetrommel 13 hintere sichtbar; der in Drehrichtung vordere Schenkel 20' (s. Fig. 5) ist von einem daran mittels Schrauben 23 lösbar befestigten Werkzeug 22 verdeckt ist.

Fig. 3 und 4 zeigen ein einzelnes Werkzeug 22 in perspektivischer Ansicht bzw. in einer Seitenansicht entlang der Achse 34 der Abscheidetrommel 13. Das Werkzeug 22 ist einteilig aus einem Stahlblechzuschnitt gefertigt. Es umfasst ein langgestrecktes plattenförmiges Rückgrat 24, von dem entlang einer Längskante mehrere Finger 25, 26 abstehen. Das Rückgrat 24 ist vorgesehen, um an seiner in Fig. 4 vom Betrachter abgewandten Seine an einem Schenkel 20' (s. Fig. 5) eines der Winkelprofile 19 befestigt zu werden und diesen zu bedecken, wobei die Finger 25, 26 über die Ecke des Winkelprofils 19 überstehen. Entlang dieser Ecke wechseln sich mit dem Rückgrat 24 koplanare Finger 25 mit Fingern 26 ab, die gegen die gemeinsame Ebene des Rückgrats 24 und der Finger 25 um einen Winkel γ von hier etwas über 10° ausgelenkt sind. Dem Betrachter in Fig. 4 zugewandte Seiten der Finger 25, 26 bilden jeweils eine Wirkoberfläche 28 bzw. 29, die vorgesehen ist, um im Betrieb der Abscheidetrommel Erntegut vor sich herzuschieben und zu verdichten. Die Finger 26 sind geringfügig kürzer als die Finger 25. Vom Rückgrat 24 abgewandte distale Kanten der Wirkoberflächen 28, 29 sind mit 31 bzw. 32 bezeichnet.

Eine genauere Betrachtung von Fig. 2 zeigt, dass die Finger 25, 26 der Werkzeuge 22 zwar in Abmessungen, Abstand und Orientierung relativ zum Rückgrat identisch sind, dass sich die Werkzeuge 22 aber nicht alle völlig gleichen. Indem zunächst an einem Flachmaterialband die Finer 25, 26 geformt werden und dann Abschnitte von dem Materialband abgeschnitten werden, deren Länge kein ganzzzahliges Vielfaches des Abstands der Finger ist, wird erreicht, dass die Fingre 25, 26 verschiedener Werkzeuge 22 in Richtung der Achse 34 gegeneinander versetzt sind, so dass jeder Punkt des Abscheidekorbs 17 im Laufe einer Trommeldrehung von unterschiedlich orientierten Fingern 25 und 26 überstrichen wird.

Wie in Fig. 5 zu erkennen, unterteilen die Werkzeuge 22 den Spalt zwischen der Abscheidetrommel 13 und dem Abscheidekorb 17, durch den das Erntegut befördert wird, in mehrere jeweils durch Werkzeuge 22 voneinander getrennte Zwischenräume 27, die jeweils entgegen der Förderrichtung, zwischen dem Erntegut zugewandten Wirkoberflächen 28, 29 der Finger 25, 26 eines Werkzeugs 22 einerseits und dem Abscheidekorb 17 andererseits, enger werden. Die Form der Winkelprofile 19 bestimmt einen Anstellwinkel β, unter dem das Rückgrat 24 und die Finger 25 eines Werkzeugs 22 einen von der Achse 34 der Abscheidetrommel 13 aus durch die distale Kante 31 der Finger 25 des Werkzeugs 22 verlaufenden Radius r₂ kreuzen.. Der Winkel β ist mit 40° groß genug, um das Erntegut zwischen den ihm bei der Drehung der Abscheidetrommel 13 zugewandten Wirkoberflächen 28 der Finger 24 und dem Abscheidekorb 17 zu verdichten und, beim Übergang von einem Zwischenraum 26 in einen nachfolgenden durch einen Engpass 30 zwischen einer distalen Kante 31 der Finger 24 in einen nachfolgenden Zwischenraum 27 zu verkneten, so dass Körner freigesetzt werden können, die zuvor von umgebenden anderen Pflanzenbestanteilen daran gehindert wurden, in Kontakt mit dem Abscheidekorb 17 zu gelangen. Kleine Vorsprünge 33 oder Rippen am Abscheidekorb 17 begünstigen die Knetwirkung.

Eine in der Wirkoberfläche 29 der Finger 26 verlaufende Ebene kreuzt den Radius r₂ unter einem Winkel β-γ, bzw. einen durch die distale Kante 32 der Finger 26 verlaufenden Radius r₁ unter einem Winkel α, der geringfügig kleiner ist als β-γ und hier 30° beträgt. Indem die Finger 26 weiter in den angrenzenden Zwischenraum 27 hinein vorspringen als die Finger 25, wirken sie einer übermäßigen Verdichtung des Ernteguts an deren Wirkoberflächen 28 entgegen und vermindern so die Gefahr, dass die Abscheidetrommel 13 bei zu hohem Gutaufkommen blockiert; stattdessen schieben sie das Erntegut vor sich her in Richtung des Hordenschüttlers 16. Um sicherzustellen, dass das Erntegut an den distalen Kanten 32 der Finger 26 nicht verklemmt, sind letztere kürzer als die Finger 25, so dass trotz deren steilerer Orientierung der Abstand der distalen Kanten 32 vom Abscheidekorb 17 nicht kleiner ist als der der Kanten 31. Im Fall der Fig. 5 liegen die distalen Kanten 31, 32 auf einem gleichen um die Drehachse 34 zentrierten Kreis, so ist der Abstand zum Abscheidekorb 17 für alle distalen Kanten 31, 32 derselbe.

Abweichend von der Anordnung der Fig. 1 sind auch Mähdrescher mit Dreschwerken bekannt, bei denen auf eine wie in Fig. 1 quer zur Fahrtrichtung orientierte Dreschtrommel eine Abscheidetrommel folgt, die im Wesentlichen in Fahrtrichtung ausgerichtet ist und die das Erntegut nicht wie die Dreschtrommel 17 in Richtung ihres Umfangs fördert, sondern in Richtung ihrer Achse. Auch eine solche Abscheidetrommel kann mit Werkzeugen bestückt sein, die wie die Werkzeuge 22 unterschiedlich geneigte Wirkoberflächen aufweisen. Diese Werkzeuge können wie in Fig. 2 gezeigt, parallel zur Achse der Abscheidetrommel orientiert sein; um eine Förderwirkung in axialer Richtung zu erzielen, können sie mit schraubenlinienförmig verlaufenden Rippen am gegenüberliegenden Abscheidekorb zusammenwirken; denkbar ist hier aber auch, die Werkzeuge selber schraubenlinienförmig entlang der Achse anzubringen.

### Bezugszeichen

- 1: Dreschwerk
- 2: Karosserie
- 3: Pflanze
- 4: Dreschstufe
- 5: Reinigungsstufe
- 6: Schrägförderer
- 7: Vorsatzgerät
- 8: Korntank
- 9: Zuführboden
- 10: Abscheidestufe
- 11: Zuführtrommel
- 12: Dreschtrommel
- 13: Abscheidetrommel
- 14: Wendetrommel
- 15: Dreschkorb
- 16: Hordenschüttler
- 17: Abscheidekorb
- 18: Rotorkern
- 19: Winkelprofil
- 20: Schenkel
- 21: Rotor
- 22: Werkzeug
- 23: Schraube
- 24: Rückgrat
- 25: Finger
- 26: Finger
- 27: Zwischenraum

- 28: Wirkoberfläche
- 29: Wirkoberfläche
- 30: Engpass
- 31: distale Kante
- 32: distale Kante
- 33: Vorsprung
- 34: Achse
- 35: Zacken

## Patentansprüche

1. Dreschwerk (1) für einen Mähdrescher mit einer Dreschstufe (4) und einer Abscheidestufe (10), die angeordnet ist, um von der Dreschstufe (4) einen Strom von wenigstens partiell von seinem Kornanteil befreitem Erntegut zu empfangen, wobei die Abscheidestufe (10) eine um eine Achse (34) drehbare Abscheidetrommel (13) und einen die Abscheidetrommel (13) umgebenden Abscheidekorb (17) umfasst, **dadurch gekennzeichnet, dass** die Abscheidetrommel (13) eine Mehrzahl von Werkzeugen (22) mit jeweils wenigstens einer den Strom des Ernteguts kontaktierenden Wirkoberfläche (28, 29) aufweist, dass eine erste (29) der Wirkoberflächen eine von ihrem achsfernsten Punkt (32) und der Achse (34) aufgespannte Radialebene (r₁) unter einem ersten Anstellwinkel (α) schneidet, und dass eine zweite (28) der Wirkoberflächen eine von ihrem achsfernsten Punkt (31) und der Achse (34) aufgespannte Radialebene (r₂) unter einem zweiten Anstellwinkel (β) schneidet, der von dem ersten Anstellwinkel (α) verschieden ist.

2. Dreschwerk nach Anspruch 1, bei dem der erste Anstellwinkel (α) in einem Intervall [30°-Δα, 30°+Δα] liegt und/oder der zweite Anstellwinkel (β) in einem Intervall [40°-Δβ, 40°+Δβ] liegt und/oder der erste und der zweite Anstellwinkel (α, β) sich um einen Winkel γ unterscheiden, wobei Δα und/oder Δβ kleiner als 10°, vorzugsweise kleiner als 5° oder kleiner als 2° ist und/oder γ mindestens 2°, vorzugsweise mindestens 5° oder 10° beträgt.

3. Dreschwerk nach Anspruch 1 oder 2, bei dem der Abstand des achsfernsten Punkts (32) jeder der ersten Wirkoberflächen (29) von dem Abscheidekorb (17) mindestens so groß ist wie der Abstand des achsfernsten Punkts (31) jeder der zweiten Wirkoberflächen (28) von dem Abscheidekorb (17).

4. Dreschwerk nach Anspruch 1, 2 oder 3, bei dem das wenigstens eine Werkzeug (22) plattenartig mit einem parallel zur Achse (34) langgestreckten Rückgrat (24) und von dem Rückgrat (24) radial nach außen abstehenden Fingern (25, 26) ist, wobei jeder Finger (25, 26) eine der Wirkoberflächen (28, 29) aufweist und die Orientierungen der Wirkoberflächen (28, 29) von zueinander benachbarten Fingern (25, 26) unterschiedlich sind.

5. Dreschwerk nach Anspruch 4, bei dem das Rückgrat (24) eines Werkzeugs (22) koplanar zu einem Teil seiner Finger (25), vorzugsweise den jeweils eine der zweiten Wirkoberflächen (28) aufweisenden Fingern (25), ist.

6. Dreschwerk nach Anspruch 4 oder 5, bei dem das Werkzeug (22) aus einem Stück Flachmaterial durch Ausbilden eines randseitig offenen Einschnitts zwischen je zwei Fingern (25, 26) und Auslenken nur eines Teils der Finger (26) aus einer Ebene des Rückgrats (24) gebildet ist.

7. Dreschwerk nach einem der Ansprüche 4 bis 6, bei dem mehrere Werkzeuge (22) über den Umfang der Abscheidetrommel (13) verteilt sind und eine erste Wirkoberfläche (29) eines der Werkzeuge im radialen Schnitt mit einer zweiten Wirkoberfläche (28) eines anderen der Werkzeuge (22) überlappt.

8. Dreschwerk nach einem der Ansprüche 4 bis 7, bei dem ein Rotor (21) der Abscheidetrommel (13) einen Querschnitt in Form eines Sterns mit mehreren Zacken (35) aufweist, wobei eine in Drehrichtung der Abscheidetrommel (13) vordere Flanke jedes Zackens (35) als Träger für eines der Werkzeuge (22) ausgebildet ist.

9. Dreschwerk nach einem der vorhergehenden Ansprüche, bei dem die Achse (34) der Abscheidetrommel (13) parallel ist zu einer Achse einer Dreschtrommel (12) der Dreschstufe (4).

10. Mähdrescher mit einem Dreschwerk (1) nach einem der Ansprüche 1 bis 9, mit einer Nachbearbeitungseinrichtung, insbesondere einem Hordenschüttler (16), die angeordnet ist, um den Strom von wenigstens partiell ausgedroschenem Erntegut von der Abscheidetrommel (13) zu empfangen, und optional einer Wendetrommel (14) zum Überleiten des Stroms von der Abscheidetrommel (13) zur Nachbearbeitungseinrichtung.
